(19) Europäisches Patentamt
European Patent Office
Office européen des brevets

(11) **EP 0 977 395 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(51) Int Cl.:
*H04L 1/00* (2006.01)        *G06F 11/10* (2006.01)
*G06F 11/18* (2006.01)

(21) Anmeldenummer: **99440213.9**

(22) Anmeldetag: **28.07.1999**

(54) **Verfahren zur sicheren einkanaligen Übertragung von Daten zwischen den Rechnerknoten eines Rechnerverbundes sowie Rechnerverbund und Rechnerknoten**

Method of secure monochannel transfer of data between nodes of a network, computer network and computer nodes

Méthode de transfert monocanal sécurisé de données entre les noeuds de calcul d'un réseau d'ordinateurs ainsi qu'un réseau d'ordinateurs et que des noeuds de calculs

(84) Benannte Vertragsstaaten:
**AT BE CH CY DE DK ES FI FR GB GR IE IT LI LU MC NL PT SE**

(30) Priorität: **28.07.1998 DE 19833867**

(43) Veröffentlichungstag der Anmeldung:
**02.02.2000 Patentblatt 2000/05**

(73) Patentinhaber: **ALCATEL**
**75008 Paris (FR)**

(72) Erfinder:
• **Nikolaus, König, Dipl.-Ing.**
  **2320 Schwechat (AT)**
• **Reichl, Klaus, Dipl.-Ing.**
  **1040 Wien (AT)**
• **Veider, Alfred, Dr.**
  **1120 Wien (AT)**
• **Fitzke, André, Dipl.-Ing.**
  **70806 Kornwestheim (DE)**
• **Kantz, Heinz, Dr.**
  **1230 Wien (AT)**
• **Neuerburg, Gerhard, Dipl.-Ing.**
  **70180 Stuttgart (DE)**
• **Arnold, Stefan, Dipl.-Ing.**
  **71706 Markgröningen (DE)**
• **Kohler, Dietmar**
  **71254 Ditzingen (DE)**
• **Maier, Matthias, Dipl.-Ing.**
  **71155 Altdorf (DE)**
• **Püntzner, Wolfgang, Dipl.-Ing.**
  **71640 Ludwigsburg (DE)**

(74) Vertreter: **Menzietti, Domenico et al**
**Alcatel**
**Intellectual Property Department, Stuttgart**
**70430 Stuttgart (DE)**

(56) Entgegenhaltungen:
**EP-A- 0 720 337          DE-A- 4 315 710**

## Beschreibung

Die Erfindung betrifft ein Verfahren zur sicheren einkanaligen Übertragung von Daten zwischen den Rechnerknoten eine Rechnerverbundes nach dem Oberbegriff des Anspruchs 1, einen Rechnerverbund nach dem Oberbegriff des Anspruchs 9 sowie einen Rechnerknoten nach dem Oberbegriff des Anspruchs 16.

Einführung

Zur Steuerung und Überwachung sicherheitskritischer Vorgänge, etwa im Bereich der Luft- und Raumfahrt oder der Eisenbahnsignaltechnik, werden häufig Mehrrechnersysteme verwendet. Die Rechner innerhalb eines solchen Mehrrechnersystems führen die erforderlichen Berechnungen parallel und unabhängig voneinander durch. Anschließend werden die ermittelten Ergebnisse miteinander verglichen und, sofern die Ergebnisse mehrheitlich übereinstimmen, zur Ausgabe zugelassen. Ein Fehler innerhalb eines Rechners wird auf diese Weise schnell erkannt und führt nicht zu einem gefährlichen Zustand. In der Eisenbahnsignaltechnik bezeichnet man ein solches Mehrrechnersystem als "signaltechnisch sicher".

Bei vielen Anwendungen sind mehrere Mehrrechnersysteme - im folgenden als Rechnerknoten bezeichnet - zu einem Rechnerverbund zusammengefaßt. Über Kommunikationskanäle tauschen die Rechnerknoten in einem solchen Rcchnerverbund untereinander Daten aus. Im Zusammenhang mit diesem Datenaustausch können Fehler auftreten, die zur Gewährleistung der Sicherheit frühzeitig erkannt werden müssen.

Bekannte Lösungen

Aus der DE-A1-39 24 266 ist ein Verfahren zum Betrieb einer signaltechnisch sicheren einkanaligen Schnittstelle bekannt. Bei diesem bekannten Verfahren ermitteln die Rechner eines Rechnerknotens parallel zueinander Datentelegramme. Die Rechner tauschen die von ihnen ermittelten Datentelegramme untereinander aus und vergleichen sie miteinander. Die Vergleichsergebnisse werden einer Auswahleinrichtung zugeführt, die jeweils zwei Rechner im Knoten auffordert, ihre Datentelegramme einem Parallel/Seriell-Wandler zu übergeben. Von dort gelangen die Datentelegramme in serieller Form auf eine Datenleitung, über die sie an einen anderen Rechnerknoten übertragen werden.

Zur Erhöhung der Sicherheit werden die Datentelegramme bei diesem bekannten Verfahren in normaler Form und zusätzlich in invertierter Form übertragen. Außerdem enthält jedes Datentelegramm Redundanzdaten, die aus den zu übertragenden Nutzdaten mit Hilfe eines Generatorpolynoms berechnet werden. Die Rechner im empfangenden Rechnerknoten werten die Datentelegramme mit den darin enthaltenen Redundanzdaten aus und können auf diese Weise Fehler, die ihre Ursache in fehlerhaften Parallel/Seriell-Wandlern oder in einer gestörten Datenleitung haben, schnell erkennen. Zur Erhöhung der Verfügbarkeit werden bei dem bekannten Verfahren geeignete Fehlermaßnahmen, etwa ein Umschalten auf redundante Baugruppen, vorgeschlagen.

Falls ein fehlerhafter Rechner eines Rechnerknotens selbständig fehlerhafte Nutzdaten generiert, so ist er prinzipiell auch in der Lage, dazu korrekte Redundanzdaten zu ermitteln und zu senden, da er alle dazu erforderlichen Mittel besitzt. Da jedoch noch ein zweiter Rechner, der nicht als fehlerhaft angenommen wird, ein invertiertes Datentelegramm mit Nutz- und Redundanzdaten sendet, wird ein empfangender Rechnerknoten Daten unterschiedlichen Inhalts empfangen. Dadurch erkennt der empfangende Rechnerknoten, daß ein Fehler aufgetreten ist. Sowohl die normal als auch die invertiert übertragenen Datentelegramme müssen eine Kodierung enthalten, der ein empfangender Rechnerknoten entnehmen kann, welcher Rechner das jeweilige Datentelegramm erstellt hat. Ohne eine solche Kodierung wäre für einen empfangenden Rechnerknoten nicht überprüfbar, ob nicht ein fehlerhafter Rechner beide Datentelegramme erstellt hat. Nachteilig hierbei ist, daß der empfangende Rechnerknoten die den Rechnern des sendenden Rechnerknotens zugeordneten Kodierungen kennen muß. Für den empfangenden Rechnerknoten ist der Aufbau des sendenden Rechnerknotens somit nicht transparent. Dies hat u. a. zur Folge, daß Rechnerknoten verschiedener Hersteller nicht ohne weiteres miteinander zu einem Rechnerverbund zusammengeschlossen werden können

Das Dokument DE-A1-43 15710 beschreibt ein Verfahren zum Übertragen von Nachrichten von einem aus mindestens zwei Teilsystemen bestehenden. System zu einem aus mindestens zwei Teilsystemen bestehenden System.

Aufgabe der Erfindung

Aufgabe der Erfindung ist es, ein Verfahren zur sicheren einkanaligen Übertragung von Daten zwischen den Rechnerknoten eine Rechnerverbundes, einen zur Ausführung des Verfahrens geeigneten Rechnerverbund sowie einen Rechnerknoten anzugeben, bei denen die Sicherheit bei der Kommunikation zwischen Rechnerknoten gewährleistet ist, ohne daß Datentelegramme von zwei unterschiedlichen Rechnern übertragen zu werden brauchen.

**EP 0 977 395 B1**

Zusammenfassung der Erfindung

Das erfindungsgemäße Verfahren löst diese Aufgabe dadurch, daß verhindert wird, daß ein Rechner, der über einen für die Kommunikation zwischen Rechnerknoten vorgesehenen knotenexternen Kommunikationskanal Nutzdaten sendet, zu diesen Nutzdaten korrekte Redundanzdaten ermittelt. Falls in einem Rechnerknoten ein fehlerhafter Rechner selbständig fehlerhafte Nutzdaten generiert und diese sendet, so ist er zwar möglicherweise noch in der Lage, *irgendwelche* Redundanzdaten beim Senden hinzuzufügen. Die gesendeten Redundanzdaten können jedoch nicht korrekt, d. h. nach der vereinbarten Vorschrift, ermittelt sein, weil erfindungsgemäß ein sendender Rechner grundsätzlich keine korrekten Redundanzdaten ermitteln kann. Ein empfangender Rechner wird folglich feststellen, daß - sofern überhaupt Redundanzdaten gesendet werden - diese nicht korrekt aus den Nutzdaten abgeleitet worden sind. Der Fehler offenbart sich somit zuverlässig auf der Empfängerseite.

Bei einem ersten vorteilhaften Variante der Erfindung ermitteln die Rechner die Redundanzdaten aus den Nutzdaten mit Hilfe einer Tabelle, die in einem Datenspeicher unter einer festgelegten Adresse abgespeichert ist. Sobald ein Rechner Zugriff auf den knotenexternen Kommunikationskanal bekommen soll, wird von den anderen Rechnern veranlaßt, daß bei diesem Rechner die Adreßinformation ("Tabellenzeiger") zerstört ist. Der Nutzdaten ausgebende Rechner kann dann nicht mehr auf die Tabelle zugreifen und somit auch keine oder allenfalls fehlerhafte Redundanzdaten ermitteln.

Bei einem weiteren vorteilhaften Ausführungsbeispiel der Erfindung wird ferner verhindert, daß ein defekter Rechner fehlerhaft empfangene Nutzdaten irrtümlich mit korrekten Redundanzdaten versieht und die Nutz- sowie die daraus korrekt ermittelten Redundanzdaten den anderen Rechnern im empfangenden Rechnerknoten übergibt. Bei einem solchen Fehlerszenario hätten nämlich die anderen Rechner keine Möglichkeit, einen Fehler festzustellen, und würden daher die fehlerhaften Nutzdaten weiterverarbeiten. Erfindungsgemäß haben somit nur die Rechner in einem Rechnerknoten die Möglichkeit, Redundanzdaten zu ermitteln, die nicht selbst unmittelbar Zugang zum Kommunikationskanal haben. Der unmittelbare Zugang wird hier unterschieden vom mittelbaren Zugang, bei dem ein Rechner Daten *nur über* einen anderen Rechner senden oder empfangen kann. Das Senden und Empfangen von Nutz-und Redundanzdaten über den Kommunikationskanal einerseits und die Berechnung von Redundanzdaten andererseits sind bei diesem Ausführungsbeispiel also vollständig voneinander getrennt.

Bei einer anderen Variante der Erfindung werden die Redundanzdaten aus den Nutzdaten mit Hilfe eines Redundanzdatenberechnungsprozesses berechnet. Erfindungsgemäß wird verhindert, daß ein Rechner, der über den knotenexternen Kommunikationskanal Nutzdaten sendet, Zugriff auf einen Redundanzdatenberechnungsprozeß hat, mit dem zu diesen Nutzdaten Redundanzdaten berechenbar sind. Vorzugsweise verfügt jeder Rechner über einen Ein- und einen Ausgabepfad. Während in allen *Eingabepfaden* ein Redundanzdatenberechnungsprozeß vorhanden ist, hat der Rechner, der unmittelbar Zugang zum knotenexternen Kommunikationskanal hat, in seinem *Ausgabepfad* keinen Redundanzdatenberechnungsprozeß. Auf die in den Eingabepfaden vorhandenen Redundanzdatenberechnungsprozesse hat dieser Rechner keinen Zugriff.

Bei einer weiteren Variante der Erfindung bedarf es immer des Zusammenwirkens von *zwei* Rechnern, um aus einem Nutzpolynom N(z) ein korrektes Redundanzpolynom zu ermitteln. Beide Rechner verfügen zu diesem Zweck über jeweils einen Polynomsatz. Nur durch Kombination beider Polynomsätze ist eine korrekte Berechnung eines Redundanzpolynoms möglich. Ein einzelner Rechner ist nicht in der Lage, allein mit seinem Polynomsatz korrekte Redundanzdaten zu berechnen.

Weitere vorteilhafte Ausgestaltungen der Erfindung sind den Unteransprüchen entnehmbar. Ein erfindungsgemäßer Rechnerverbund ist Gegenstand der Ansprüche 9 bis 5, ein erfindungsgemäßer Rechnerknoten Gegenstand des Anspruchs 16.

Die Erfindung wird nachfolgend anhand der Ausführungsbeispiele und der Zeichnungen eingehend erläutert. Es zeigen:

Fig. 1:   Aufbau eines zur Ausführung des erfindungsgemäßen Verfahrens geeigneten Rechnerverbundes RV;

Fig. 2:   Flußdiagramms zur Erläuterung, wie bei dem in Fig. 1 dargestellten Rechnerverbund RV vor dem Senden von Nutz- und Redundanzdaten diese innerhalb eines Rechnerknotens ermittelt und ausgetauscht werden;

Fig. 3:   Flußdiagramms zur Erläuterung, wie bei dem in Fig. 1 dargestellten Rechnerverbund RV nach dem Empfang von Nutz- und Redundanzdaten diese innerhalb eines Rechnerknotens ausgewertet und ausgetauscht werden;

Fig. 4:   Tabelle zur Erläuterung einer Variante der Erfindung nach Anspruch 2;

Fig. 5:   Aufbau eines anderen zur Ausführung des erfindungsgemäßen Verfahrensgeeigneten Rechnerverbundes RV;

Fig. 6: Flußdiagramms zur Erläuterung, wie bei dem in Fig. 5 dargestellten Rechnerverbund RV vor dem Senden von Nutz- und Redundanzdaten diese innerhalb eines Rechnerknotens ermittelt und ausgetauscht werden;

Fig. 7: Schematische Darstellung der Architektur eines aus zwei Rechnern R1A und R1B bestehenden Rechnerknotens RK;

Fig. 8: Abgewandelte Darstellung des in Fig. 1 dargestellten Rechnerknotens RK1 zur Erläuterung einer Variante der Erfindung nach Anspruch 5;

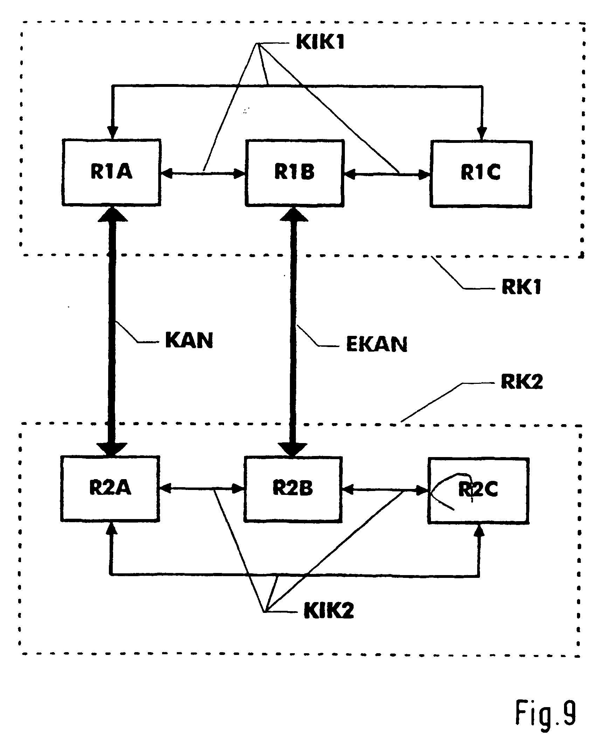

Fig. 9: Aufbau eines weiteren zur Ausführung des erfindungsgemäßen Verfahrens geeigneten Rechnerverbundes RV, bei dem zusätzlich ein knotenexterner Ersatzkommunikationskanal EKAN vorgesehen ist.

Beschreibung der Ausführungsbeispiele

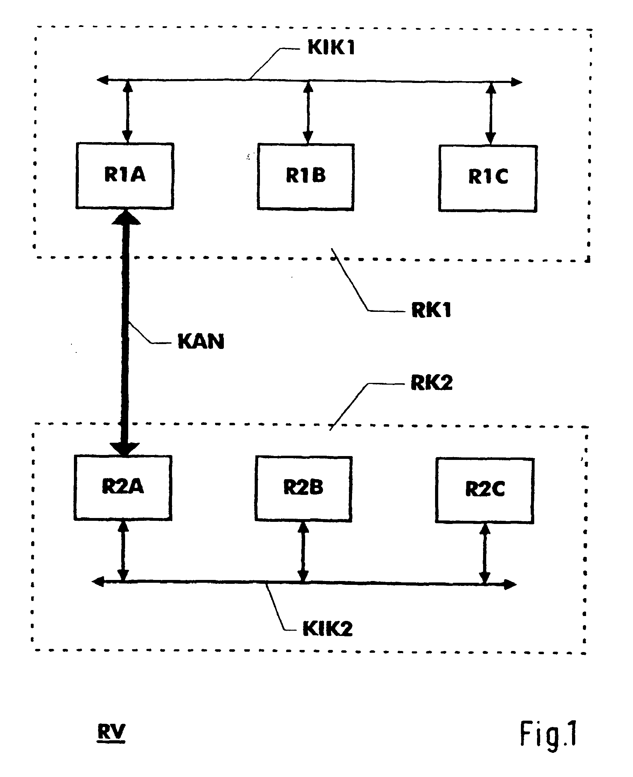

Anhand der Fig. 1 wird im folgenden der Aufbau eines Rechnerverbundes erläutert, der zur Ausführung des erfindungsgemäßen Verfahrens geeignet ist. Der Rechnerverbund RV besteht in diesem Ausführungsbeispiel aus zwei Rechnerknoten RK1 und RK2, die ihrerseits jeweils drei Rechner R1A, R1B, R1C und R2A, R2B, R2C umfassen. Unter einem Rechner wird in diesem Zusammenhang eine Datenverarbeitungsanlage verstanden, die zumindest eine zentrale Prozessoreinheit und einen Datenspeicher umfaßt. Ob zusätzlich Ein-/Ausgabemittel vorzusehen sind, hängt von der Art des Einsatzes des Rechnerverbundes ab.

Die Rechner in jedem Rechnerknoten verarbeiten parallel und unabhängig voneinander die ihnen zugeführten Daten und tauschen die ermittelten Ergebnisse untereinander aus. Für diesen Datenaustausch ist in jedem Rechnerknoten ein knoteninterner Kommunikationskanal KIK1 bzw. KIK2 vorgesehen. Die konkrete Ausgestaltung dieses knoteninternen Kommunikationskanals ist für die Erfindung nicht wesentlich; möglich sind beispielsweise, wie in Fig. 1 angedeutet, lokale Netzwerke (LANs, z. B. Ethernet oder Token Ring), oder auch, wie in Fig. ? dargestellt, Punkt-zu-Punkt-Verbindungen zwischen den einzelnen Rechnern.

Die beiden Rechnerknoten sind signaltechnisch sicher aufgebaut. Dies bedeutet, daß das vom Rechnerknoten überwachte oder gesteuerte System beim Auftreten eines Einzelfehlers grundsätzlich in einen sicheren Zustand übergeht. Zur Gewährleistung der signaltechnischen Sicherheit werden Ergebnisse nur dann zur Ausgabe zugelassen, wenn sie von einer Mehrheit der Rechner im Rechnerknoten übereinstimmend ermittelt worden sind. Kommen bei einem 3-Rechner-Knoten alle drei Rechner zu unterschiedlichen Ergebnissen, so wird keines der Ergebnisse ausgegeben.

Zum Datenaustausch zwischen den beiden Rechnerknoten RK1 und RK2 ist ein knotenexterner Kommunikationskanal KAN vorgesehen. Auch hier ist die konkrete Ausgestaltung des Kanals nicht wesentlich, so daß auf das zu den internen Kommunikationskanälen KIK1, KIK2 Gesagte verwiesen werden kann. Weitere Kommunikationskanäle sind für den Datenaustausch nicht vorhanden. Im dargestellten Ausführungsbeispiel haben nur die Rechner R1A und R2A unmittelbar Zugang zu diesem knotenexternen Kommunikationskanal KAN. Die anderen Rechner können nur mittelbar über diese beiden Rechner Nutzdaten senden oder empfangen. Die beiden Rechner R1A und R2A sind also durch ihren Zugang zum knotenexternen Kommunikationskanal KAN vor den anderen Rechnern ausgezeichnet. Wie an späterer Stelle erläutert werden wird, muß der Zugang zum knotenexternen Kommunikationskanal KAN nicht dauerhaft festgelegt sein, sondern kann, z. B. bei Ausfall der Rechner R1A oder R2A, auch während des Betriebs des Rechnerverbundes geändert werden.

Um die Übertragung von Nutzdaten über diesen knotenexternen Kommunikationskanal KAN gegen Übertragungsfehler zu sichern, werden zusätzlich zu den Nutzdaten Redundanzdaten übertragen. Die Redundanzdaten werden vom sendenden Rcchnerknoten beispielsweise mit Hilfe eines Generatorpolynoms aus den Nutzdaten bcrechnet (mehr dazu s. unten). Der empfangende Rechnerknoten unterwirft die empfangenen Daten dem dort ebenfalls abgelegten Generatorpolynom. Aus dem Ergebnis dieser Operation ist für ihn erkennbar, ob die Daten fehlerfrei über den knotenexternen Kommunikationskanal KAN übertragen worden sind. Wird ein Fehler erkannt, so werden die empfangenen Daten verworfen; vorzugsweise wird zusätzlich eine Fehlerhandlung veranlaßt. Zu Einzelheiten hierzu wird auf nachfolgende Ausführungsbeispiele verwiesen.

Bei einem zwar unwahrscheinlichen, aber dennoch möglichen Fehlerszenario könnte es vorkommen, daß beispielsweise der Rechner R1A die Ergebnisse des vorgesehenen Vergleichs der von den Rechnern parallel ermittelten Nutzdaten ignoriert und selbständig fehlerhaft generierte Nutzdaten ausgibt. Bei bekannten Mehrrechnersystemen wäre er in einem solchen Fall in der Lage, zu diesen fehlerhaft generierten Nutzdaten auch Redundanzdaten zu ermitteln, die insofern korrekt sind, als sie tatsächlich vereinbarungsgemäß und ohne Fehler aus den Nutzdaten ermittelt worden sind. Der diese Nutz- und Redundanzdaten empfangende Rechnerknoten RK2 würde in diesem Falle bei der Auswertung feststellen, daß keine Verfälschung während der Übertragung aufgetreten ist, und folglich die Nutzdaten als korrekt akzeptieren. Dies könnte, wie eingangs bereits erwähnt, u. U. katastrophale Folgen haben.

Um dies prinzipiell auszuschließen, wird erfindungsgemäß verhindert, daß ein Rechner, der über den zweiten

**EP 0 977 395 B1**

Kommunikationskanal Nutzdaten sendet, zu diesen Nutzdaten korrekte Redundanzdaten ermittelt. Wenn nun etwa bei dem in Fig. 1 dargestellten Ausführungsbeispiel der Rechner R1A über den knotenexternen Kommunikationskanal KAN an den Rechnerknoten RK2 Nutzdaten sendet oder im Begriffe ist zu senden, so wird verhindert, daß der Rechner R1A selbständig Redundanzdaten ermittelt. Kommt es zu dem soeben geschilderten Fehlerszenario, so könnte zwar der R1A fehlerhafte Nutzdaten über den knotenexternen Kommunikationskanal KAN an den Rechnerknoten RK2 senden. Er wäre jedoch nicht in der Lage, die hierzu passenden korrekten Redundanzdaten zu ermitteln und diese zusammen mit den fehlerhaften Nutzdaten zu senden. Der empfangende Rechnerknoten RK2 würde folglich allenfalls (fehlerhafte) Nutzdaten, aber keine oder zumindest nicht korrekt berechnete Redundanzdaten empfangen. Der Fehler beim sendenden Rechner R1A würde sich somit auf der Empfängerseite in jedem Fall offenbaren, wodurch gefährliche Zustände vermieden werden.

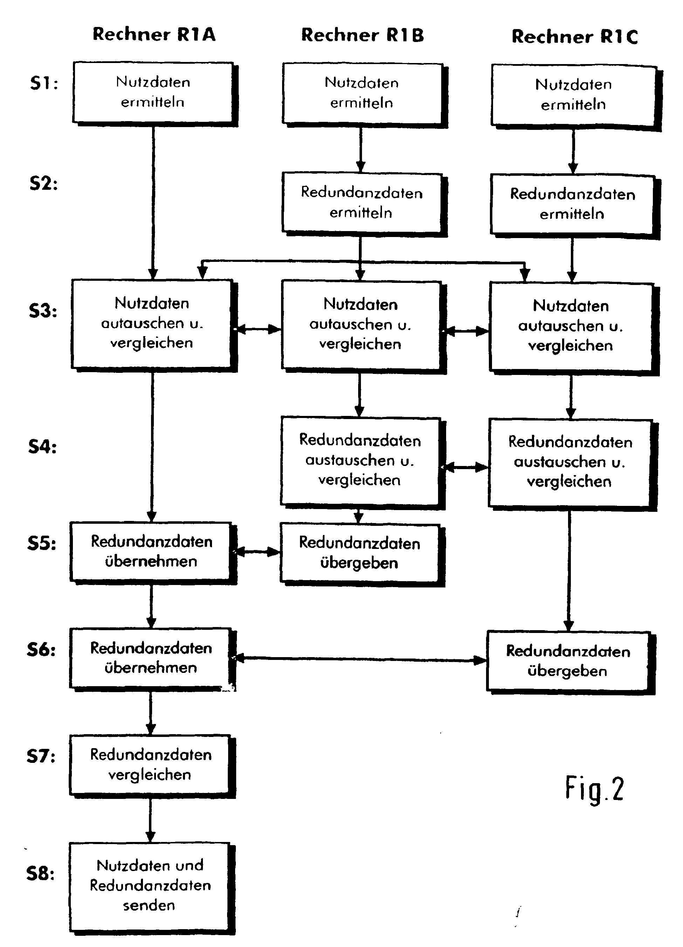

Fig. 2 zeigt anhand eines Flußdiagramms für den in Fig. 1 dargestellten Rechnerverbund RV, wie gemäß dem erfindungsgemäßen Verfahren die Rechner R1A, R1B und R1C im Rechnerknoten RK1 vorzugsweise Nutz- und Redundanzdaten ermitteln und austauschen, bevor sie diese über den knotenexternen Kommunikationskanal KAN senden. In diesem Ausführungsbeispiel ist nur der Rechner R1A unmittelbar mit dem knotenexternen Kommunikationskanal KAN physikalisch verbunden. Dies bedeutet, daß die anderen beiden Rechner über keine für den knotenexternen Kommunikationskanal KAN geeignete Schnittstelle verfügen oder zumindest keine Treiber für den Betrieb einer Schnittstelle haben. Der Datenaustausch zwischen dem Rechnerknoten RK1 und RK2 erfolgt also immer über den Rechner R1A; die anderen Rechner können keine Nutzdaten unmittelbar über den knotenexternen Kommunikationskanal KAN senden.

Wie oben bereits angesprochen, ermitteln in einem Schritt S1 alle drei Rechner R1A, R1B und R1C parallel und unabhängig voneinander Nutzdaten. Die hierfür erforderlichen Eingabedaten können beispielsweise von einem anderen Rechner(knoten) stammen, von einem Sensor zugeführt oder in die Rechner eingegeben sein. Für die Erfindung ist dies nicht wesentlich. In einem Schritt S2 ermitteln die beiden Rechner R1B und R1C zu den von ihnen ermittelten Nutzdaten Redundanzdaten. Der Rechner R1A ist hierzu erfindungsgemäß nicht in der Lage, da er unmittelbar über den knotenexternen Kommunikationskanal KAN Daten senden kann. In einem Schritt S3 tauschen die drei Rechner die von ihnen ermittelten Nutzdaten aus und vergleichen sie untereinander. Ähnlich wird in einem Schritt S4 mit den Redundanzdaten verfahren, mit dem Unterschied, daß der Austausch nur zwischen den beiden Rechnern R1B und R1C stattfindet, da der Rechner R1A erfindungsgemäß keine Möglichkeit hat, korrekte Redundanzdaten zu ermitteln. Die Schritte S3 und S4 können ggf. auch vertauscht sein. Der Vergleich der Nutz- oder Redundanzdaten beinhaltet auch einen Mehrheitsentscheid, d. h. es werden nur solche Daten akzeptiert, die von einer Mehrzahl der Rechner im Rechnerknoten übereinstimmend ermittelt worden sind.

In einem weiteren Schritt S5 übergibt der Rechner R1B, in einem Schritt S6 der Rechner R1C die auf Übereinstimmung überprüften Redundanzdaten an den Rechner R1A. Die Nutzdaten und die Redundanzdaten werden anschließend in einem Schritt S8 vom Rechner R1A über den knotenexternen Kommunikationskanal KAN an den anderen Rechnerknoten RK2 gesendet.

Optional ist es möglich, daß der Rechner R1A vor dem Senden in einem Schritt S7 die übernommenen Redundanzdaten erneut miteinander vergleicht. Diese Maßnahme dient nicht der Erhöhung der Sicherheit, sondern der Verfügbarkeit. Bei negativem Ausgang dieses Vergleichs fordert der Rechner R1A die beiden anderen Rechner auf, die Redundanzdaten erneut zu übergeben. Wird dann noch immer keine Übereinstimmung festgestellt, so geht der Rechner R1A von einem Defekt im knoteninternen Kommunikationskanal KIK1 aus und erzeugt eine Diagnosemeldung. Anschließend verwendet der Rechner R1A dann entweder die in Schritt S5 oder die in Schritt S6 übernommenen Redundanzdaten. Sollte es sich dabei um fehlerhaft übergebene Redundanzdaten handeln, so wird dies von einem empfangenden Rechnerknoten erkannt.

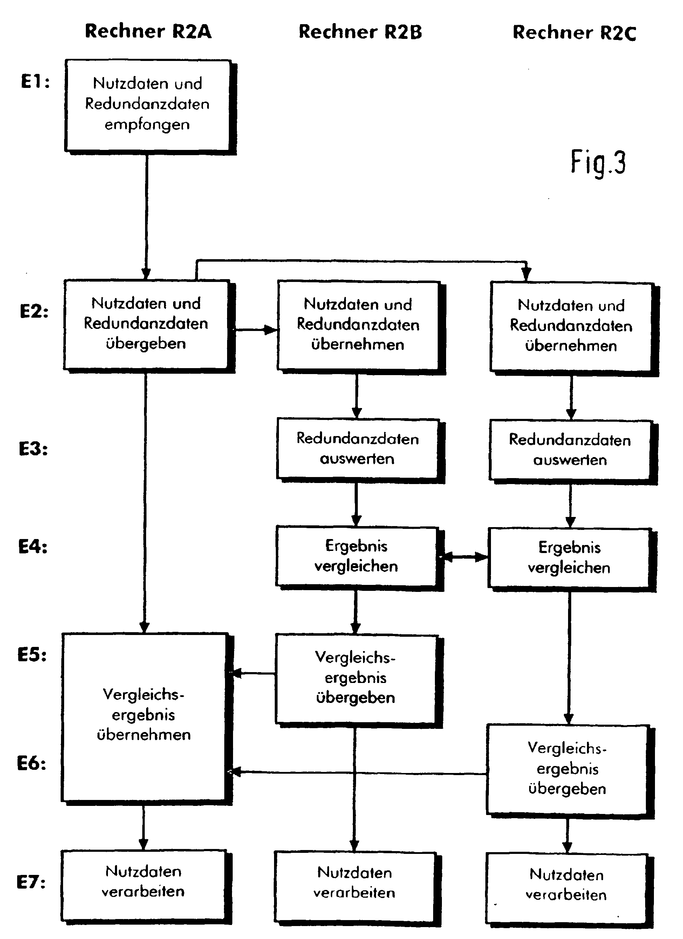

In Fig. 3 ist dargestellt, wie die empfangenen Nutz- und Redundanzdaten im Rechnerknoten RK2 verarbeitet werden. Auch im Rechnerknoten RK2 ist nur ein Rechner, hier der Rechner R2A, unmittelbar mit dem knotenexternen Kommunikationskanal KAN physikalisch verbunden. Die anderen beiden Rechner R2B und R2C haben nicht die Möglichkeit, unmittelbar über den knotenexternen Kommunikationskanal KAN Nutzdaten zu senden oder zu empfangen.

In einem Schritt E1 empfängt der Rechner R2A vom Rechner R1A gesendete Nutz-und Redundanzdaten und übergibt diese in einem Schritt E2 an die beiden anderen Rechner. Vorzugs-, aber nicht notwendigerweise verfügt er selbst nicht über die Möglichkeit, Redundanzdaten zu ermitteln, so daß die in Schritt E2 weitergegebenen Redundanzdaten mit Sicherheit vom Rechnerknoten RK1 stammen oder allenfalls auf fehlerhafte Weise vom Rechner R2A aus empfangenen oder selbst generierten Nutzdaten ermittelt worden sind.

Die vom Rechner R2A übergebenen Nutz- und Redundanzdaten werden in einem Schritt E3 von den Rechnern R2B und R2C ausgewertet. Das Ergebnis dieser Auswertung besteht entweder darin, daß die Nutzdaten mit den Redundanzdaten korrespondieren oder daß sie nicht korrespondieren. Anschließend vergleichen die beiden Rechner R2B und R2C in einem Schritt E4 ihre Ergebnisse. Stimmen die Ergebnisse überein, so werden sie von den beiden Rechner R2B und R2C in Schritten E5 und E6 an den Rechner R2A übergeben. Anschließend verarbeiten in einem Schritt E7 alle drei Rechner die empfangenen bzw. übergebenen Nutzdaten. Die Weiterverarbeitung von Nutzdaten durch den

5

Rechner R2A wird vorzugsweise davon abhängig gemacht, ob die von den beiden anderen Rechnern erhaltenen Vergleichsergebnisse übereinstimmen.

Die folgenden Abschnitte betreffen Möglichkeiten, wie verhindert werden kann, daß ein Rechner, der über den knotenexternen Kommunikationskanal KAN Nutzdaten sendet, Redundanzdaten ermittelt. Welche Mittel im konkreten Einzelfall zur Anwendung kommen, hängt insbesondere davon ab, auf welche Weise Redundanzdaten aus Nutzdaten ermittelt werden.

Variante 1

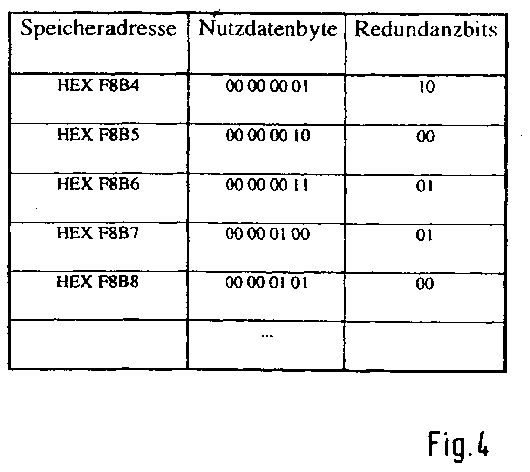

Eine Möglichkeit zur Ermittlung der Redundanzdaten besteht darin, diese mit Hilfe einer abgespeicherten Tabelle auszulesen. Fig. 4 zeigt in einem vereinfachten Beispiel eine derartige Tabelle. Jedem möglichen Nutzdatenbyte ist in diesem Beispiel eine Kombination aus zwei Redundanzbits zugeordnet. Diese Zuordnung folgt einem mathematischen Gesetz oder kann im Prinzip auch willkürlich sein. Ein Rechner, der aus Nutzdaten Redundanzdaten ermitteln möchte, zerlegt die Nutzdaten in einzelne Bytes und sucht für jedes Byte in dieser Tabelle nach den dazugehörigen Redundanzbits. Zur Ermittlung der Redundanzdaten werden anschließend alle Redundanzbits zusammengesetzt oder in anderer Weise kombiniert (Summieren etc.). Dieser Vorgang wird sowohl vor dem Senden als auch nach dem Empfangen durchgeführt.

Die Tabelle ist vorzugsweise bei jedem Rechner in einem Datenspeicher gespeichert. Ohne diese Tabelle kann ein Rechner die Redundanzdaten nicht korrekt aus den Nutzdaten ermitteln. Wenn ein Rechner nicht die Möglichkeit haben soll, aus Nutzdaten Redundanzdaten zu ermitteln, so wird erfindungsgemäß diese Tabelle im Datenspeicher "versteckt". Dies geschieht durch Zerstören der Adresse, unter der die Tabelle gespeichert ist. Eine Möglichkeit hierzu besteht darin, daß diese Adresse vom betreffenden Rechner selbst oder aber von einem anderen Rechner im Rechnerknoten gezielt mit einer falschen Adresse überschrieben wird. Es ist dann beliebig unwahrscheinlich, daß der betreffende Rechner in einem der oben geschilderten Fehlerszenarios zufällig diese Adresse auswählt und die Tabelle findet.

Bei der in Fig. 4 dargestellten Tabelle könnte z. B. die Startadresse der Tabelle HEX F8B4, im folgenden als "Tabellenzeiger" bezeichnet, mit einem falschem Wert, etwa HEX 38C2, überschrieben werden. Erst wenn der betreffende Rechner wieder Redundanzdaten aus Nutzdaten ermitteln soll, erhält er von den anderen Rechnern den korrekten Tabellenzeiger zurück.

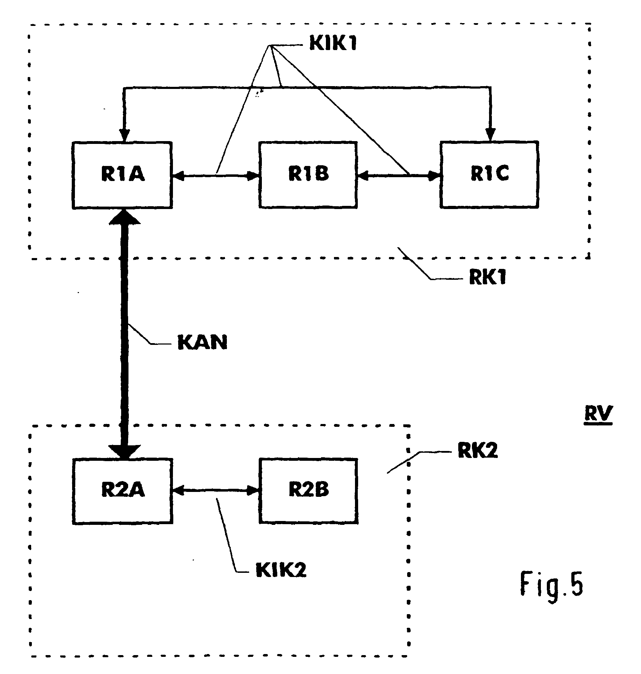

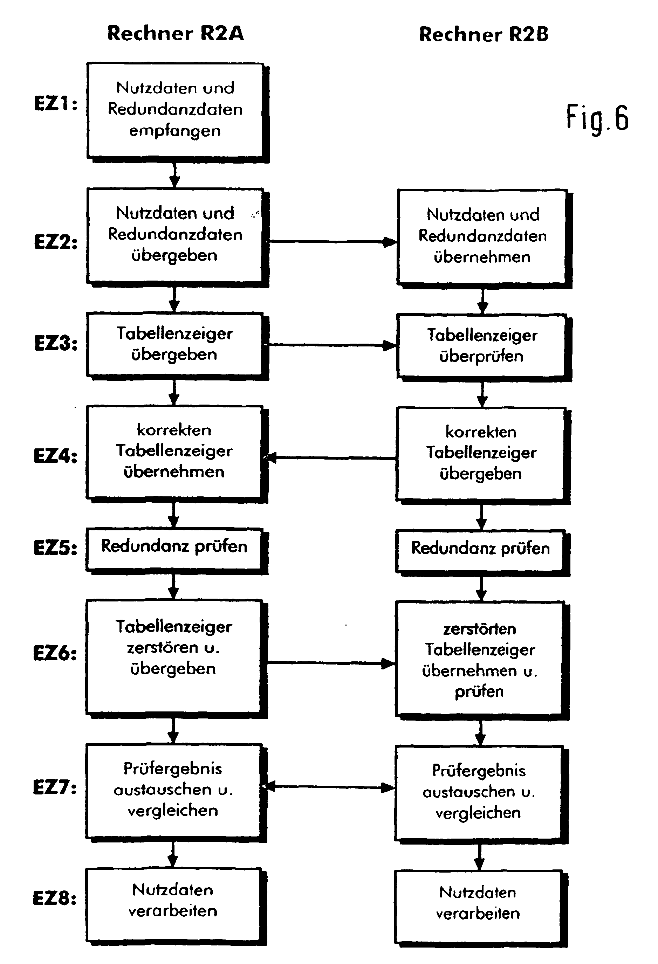

Im folgenden wird anhand der Fig. 5 und 6 ein Ausführungsbeispiel erläutert, bei dem ein drei Rechnern R1A, R1B und R1C umfassender Rechnerknoten RK1 einem zwei Rechnern R2A und R2B umfassenden Rechnerknoten Nutz- und Redundanzdaten sendet. Auf der Sendeseite laufen bei der Erstellung und beim Austausch der Nutz- und Redundanzdaten prinzipiell die gleichen Schritte S 1 bis S8 ab wie bei dem oben bereits in Fig. 2 geschilderten Ausführungsbeispiel. Die Ermittlung der Redundanzdaten vollzieht sich in Schritt S2 mit Hilfe der angesprochenen Tabelle. Im Rechner R1A, der fest mit dem knotenexternen Kommunikationskanal KAN verbunden ist, ist die Tabelle entweder überhaupt nicht oder aber nur unter einer ihm nicht bekannten Adresse gespeichert.

Auf der Empfängerseite tritt bei einem aus nur zwei Rechner bestehendem Rechnerknoten die Schwierigkeit auf, daß aus Sicherheitsgründen Redundanzdaten grundsätzlich von zwei unterschiedlichen Rechnern geprüft werden sollen. Wenn der empfangende Rechner, hier also der Rechner R2A, grundsätzlich nicht in der Lage ist, Redundanzdaten aus Nutzdaten zu berechnen, so kann er umgekehrt auch keine Redundanzdaten prüfen. Gelöst wird diese Problem dadurch, daß der empfangende Rechner R2A, nachdem er die empfangenen Redundanzdaten an den anderen Rechner R2B übergeben hat, für eine kurze Zeit in die Lage versetzt wird, selbst Redundanzdaten zu berechnen. Vorzugsweise wird dabei wie in Fig. 6 skizziert vorgegangen.

Nach dem Empfang der Nutz- und Redundanzdaten in einem Schritt EZ1 übergibt der Rechner R2A in einem Schritt EZ2 die empfangenen Nutz- und Redundanzdaten an den Rechner R2B. Der Rechner R2A verfügt zu diesem Zeitpunkt nur über einen Tabellenzeiger, der auf eine falsche Adresse zeigt. Anschließend übergibt er in einem Schritt EZ3 diesen "falschen" Tabellenzeiger an den Rechner R2B. Dieser überprüft, ob der übergebene Tabellenzeiger tatsächlich vom korrekten Tabellenzeiger abweicht. Durch diese Überprüfung wird sichergestellt, daß der empfangende Rechner R2A nicht über den korrekten Tabellenzeiger verfügte, als er die Redundanzdaten an den Rechner R2B weitergab. In einem Schritt EZ4 übergibt nun der Rechner R2B den ihm bekannten korrekten Tabellenzeiger an den Rechner R2A. Somit verfügen nun beide Rechner über den korrekten Tabellenzeiger und können, wie oben im Falle des 3-Rechner-Knotens bereits beschrieben, in einem Schritt EZ5 durch Vergleich der aus den Nutzdaten ermittelten Redundanzdaten mit den empfangenen Redundanzdaten prüfen, ob eine Verfälschung durch einen Übertragungsfehler aufgetreten ist.

Anschließend zerstört der Rechner R2A seinen Tabellenzeiger, etwa durch Überschreiben mit einem anderen Wert, und übergibt den zerstörten Tabellenzeiger in einem Schritt EZ6 an den Rechner R2B. Dieser vergleicht den übergebenen Tabellenzeiger mit dem ihm nach wie vor bekannten korrekten Tabellenzeiger und verifiziert somit, daß der Rechner R2A tatsächlich nicht mehr über den korrekten Tabellenzeiger verfügt. Alternativ hierzu kann das Überschreiben des im Rechner R2A gespeicherten Tabellenzeigers auch direkt durch den Rechner R2B vorgenommen werden. Eine nochmalige Übergabe des zerstörten Tabellenzeigers und nachfolgendes Verifizieren durch den Rechner R2B ist jedoch auch bei dieser Variante sinnvoll.

Erst jetzt tauschen die beiden Rechner R2A und R2B in einem Schritt EZ7 die in Schritt EZ5 ermittelten Prüfergebnisse aus und vergleichen sie. Nur wenn beide Prüfungen positiv ausgefallen sind, erhalten die beiden Rechner die Berechtigung, in einem Schritt EZ8 die empfangenen Nutzdaten zu verarbeiten.

Variante 2

Wenn die Redundanzdaten aus den Nutzdaten mit Hilfe eines Redundanzdatenberechnungsprozesses berechnet werden, so läßt sich auf eine andere Weise verhindern, daß ein Rechner, der über den knotenexternen Kommunikationskanal Nutzdaten sendet, Redundanzdaten ermittelt.

Dieses Ausführungsbeispiel basiert auf einer Rechnerarchitektur, bei der Softwarebausteine durch Speicherschutzmechanismen streng getrennt sind. Eine Trennung in diesem Sinne besteht zunächst zwischen der Betriebssystemebene einerseits und den darüber liegenden Schichten (Mittelebene, Applikationsebene) andererseits. Außerdem sind die innerhalb der Mittel- und Applikationsebene ablaufenden Prozesse streng voneinander getrennt. Nachrichten zwischen den Prozessen werden über sog. Message Queues abgewickelt. Diese streng gerichtete und stets überprüfbare Kommunikation trägt ebenfalls zur Unabhängigkeit der Prozesse bei.

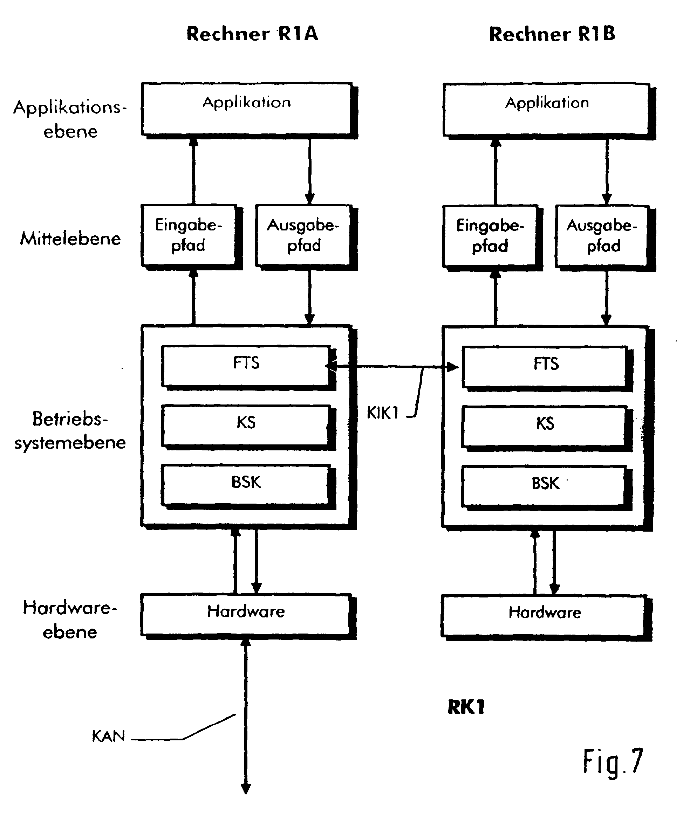

Fig. 7 zeigt in einer schematischen Darstellung ein Schichtenmodell eines aus zwei Rechnern R1A und R1B bestehenden Rechnerknotens RK1. Auf die Hardwareebene setzt die Betriebssystemebene auf. Diese ist funktional und logisch unterteilt in den Betriebssystemkernel BSK, ein Kommunikationssystem KS, welches den darüber liegenden Schichten Kommunikationsdienste zur Verfügung stellt, und ein Fehlertoleranzsystem FTS. Das Fehlertoleranzsystem FTS ist zuständig für den Austausch und Vergleich von Daten innerhalb des Rechnerknotens sowie für die knoteninterne Behandlung von Fehlern.

Über definierte gerichtete Schnittstellen kommuniziert die Mittelebene mit der darunterliegenden Betriebssystemebene. Im dargestellten Ausführungsbeispiel umfaßt die Mittelebene zwei jeweils vollständig getrennte Ein- und Ausgabepfade. Bei einem Pfad handelt es sich um einen oder mehrere Prozesse, die in geschützten Adreßräumen ablaufen und sich somit nicht gegenseitig beeinflussen können. Als Prozeß wird in diesem Zusammenhang ein in einem abgeschlossenen virtuellen Speicherbereich abgearbeiteter Code verstanden. Der Speicherschutz wird im wesentlichen durch die *Memory Mangagement Unit* (MMU) der Prozessoreinheit gewährleistet, die die logischen virtuellen Speicheradressen auf die physikalischen Speicheradressen abbildet. Bestandteil der Eingabepfade ist jeweils ein Redundanzdatenberechnungsprozeß, der der Berechnung von Redundanzdaten aus Nutzdaten dient.

Die Ausgabepfade umfassen hingegen nicht beide einen solchen Redundanzdatenberechnungsprozeß. Erfindungsgemäß ist hier vielmehr vorgesehen, daß nur der Ausgabepfad des nicht mit dem knotenexternen Kommunikationskanal KAN verbundenen Rechners R1B einen Redundanzdatenberechnungsprozeß hat. Der Ausgabepfad des mit dem knotenexternen Kommunikationskanal KAN verbundenen Rechners R1A verfügt über keinen Redundanzdatenberechnungsprozeß und kann somit *nicht* selbständig Redundanzdaten ermitteln.

Der Ausgabepfad des Rechners R1A kann auch nicht auf den Redundanzdatenberechnuhgsprozeß im Ausgabepfad des Rechners R1B zugreifen, denn dieser befindet sich in einem geschützten und somit nicht zugänglichen Adreßraum. Ein solcher Eingriff ist auch aufgrund der gerichteten Kommunikation zwischen den Prozessen mit Hilfe von Message Queues praktisch unmöglich. Aus den gleichen Gründen kann der Ausgabepfad des Rechners R1A nicht auf einen der in den Eingabepfaden enthaltenen Redundanzdatenberechnungsprozesse zugreifen.

Um zu verifizieren, daß der Ausgabepfad des Rechners R1A tatsächlich keinen Redundanzdatenberechnungsprozeß enthält, erstellt jeder Rechner eine List der in ihm vorhandenen Prozesse und übergibt diese Liste an die jeweils anderen Rechner. Bei der Überprüfung der übergebenen Listen muß sich offenbaren, daß der Redundanzdatenberechnungsprozeß im Ausgabepfad des Rechners R1A nicht vorhanden ist.

Die Ermittlung und der Austausch von Nutz- und Redundanzdaten verläuft in diesem Ausführungsbeispiel im wesentlichen genauso ab wie in den Fig. 2 und 3 dargestellt.

Variante 3

Wie bereits eingangs erwähnt, werden in einkanalig sicheren Übertragungsverfahren Redundanzdaten meist unter Verwendung eines Generatorpolynoms berechnet. Besonders bekannt in diesem Zusammenhang ist die sog. CRC-Kodierung (CRC: *Cyclic Redundancy Code).* Bei der CRC-Kodierung werden Daten als Polynome im GF(2)-Polynomraum interpretiert. Der GF(2)-Polynomraum hat u. a. die Eigenschaft, daß die Koeffizienten nur die Werte 0 oder 1 annehmen können. Ein Datenbyte B = [01 1001 01] wird im GF(2)-Polynomraum beispielsweise auf ein Polynom

$$B(z) = 0 \cdot z^7 + 1 \cdot z^6 + 1 \cdot z^5 + 0 \cdot z^4 + 0 \cdot z^3 + 1 \cdot z^2 + 0 \cdot z^1 + 1 \cdot z^0 \qquad [1.0]$$

abgebildet. Umgekehrt läßt sich jedes Polynom im GF(2)-Polynomraum als eine Abfolge von Nullen und Einsen interpretieren. Die Länge eines Polynoms ist gleich der Länge dieser Abfolge und beträgt im obigen Beispiel [1.0] 8. In diesem Sinne besteht auch eine Äquivalenz zwischen Redundanzdaten und einem Redundanzpolynom.

Bei der CRC-Kodierung wird ein Telegrammpolynom C(z) übertragen, das sich aus einem Nutzpolynom N(z) und einem Redundanzpolynom R(z) in der folgenden Weise zusammensetzt:

$$C(z) = N(z) \, z^k + R(z) \qquad [1.1]$$

Das Nutzpolynom beinhaltet die eigentlichen Nutzdaten sowie zusätzliche für die Übertragung erforderliche Daten. Der Exponent k ist die Länge des Redundanzpolynoms R(z). Anschaulich gesehen entspricht der Multiplikation mit $z^k$ einer Verschiebung des Nutzpolynoms N(z) um k Stellen nach links. Das Redundanzpolynom R(z) wird bei der CRC-Kodierung aus dem Nutzpolynom N(z) und einem vorgegebenen Generatorpolynom G(z) gemäß

$$R(z) = ( N(z) \, z^k ) \bmod G(z) \qquad [1.2]$$

gebildet. Durch diese Vorschrift ist sichergestellt, daß sich das Telegrammpolynom C(z) ohne Rest durch das Generatorpolynom G(z) teilen läßt:

$$C(z) \bmod G(z) = 0. \qquad [1.3]$$

Der Empfänger verfügt ebenfalls über das Generatorpolynom G(z). Falls der Empfänger ein Telegrammpolynom C(z) erhält, welches nicht ohne Rest durch das Generatorpolynom G(z) teilbar ist, so weiß er, daß eine Verfälschung aufgetreten ist. Ob die Verfälschung dem Sender oder der Übertragung zuzurechnen ist, kann der Empfänger aufgrund dieser Auswertung nicht ermitteln.

Erfindungsgemäß wird dieses an sich bekannte CRC-Verfahren nun so abgewandelt, daß es immer des Zusammenwirkens von *zwei* Rechnern bedarf, um aus einem Nutzpolynom N(z) ein korrektes Redundanzpolynom R(z) zu ermitteln. Beide Rechner verfügen zu diesem Zweck über unterschiedliche Polynomsätze, die nicht ohne weiteres auseinander herleitbar sind.

Das erfindungsgemäße Verfahren wird an Beispiel eines 2-Rechnersystems mit zwei Rechner R1 und R2 erläutert. Der Rechner R1 hat unmittelbar Zugang zu einem knotenexternen Kommunikationskanal, weswegen er allein nicht in der Lage sein soll, ein Redundanzpolynom R(z) korrekt zu ermitteln.

Zunächst werden die folgenden Polynome festgelegt:

G (z):    Generatorpolynom mit Grad k (nicht wählbar)

$G_1(z)$:    frei wählbares Polynom

$G_2(z)$:    frei wählbares Polynom mit $G_2(z) \neq G_1(z)$

k:    Länge des Redundanzpolynoms

Die Polynomsätze der zweier Rechner R1 und R2 sind erfindungsgemäß wie folgt definiert:

*Polynomsatz P1 des RechnersR 1:*

$$A_1(z) = G_2(z) \, ( \, z^k \bmod G(z))$$ [2.1]

$$B_1(z) = G_2(z) \, G(z)$$ [2.2]

$$D_1(z) = G_1(z)$$ [2.3]

*Polynomsatz P2 des Rechner R2:*

$$A_2(z) = G_1(z) \, ( \, z^k \bmod G(z))$$ [2.4]

$$B_2(z) = G_1(z) \, G(z)$$ [2.5]

$$D_2(z) = G_2(z)$$ [2.6]

*Senderseite*

Der Rechner R2 berechnet nun aus dem Nutzpolynom N(z) und den Polynomen $A_2(z)$ und $B_2(z)$ ein Teilredundanzpolynom $R_2(z)$ gemäß

$$R_2(z) = ( \, N(z) \, A_2(z) \, ) \bmod B_2(z)$$ [2.7]

und übermittelt dieses an den Rechner R1. Der Rechner R 1 berechnet aus $R_2(z)$ und $D_1(z)$ das Redundanzpolynom R(z) gemäß

$$R(z) = R_2(z) \, / \, D_1(z).$$ [2.9]

Anschließend erstellt der Rechner R1 aus dem Nutzpolynom N(z) und dem berechneten Redundanzpolynom R(z) das zu übertragende Telegrammpolynom C(z):

$$C(z) = N(z) \, z^k + R(z)$$ [2.10]

Im folgenden soll gezeigt werden, daß die Festlegung des Redundanzpolynoms R(z) gemäß Gleichung [2.9] tatsächlich der geforderten Form von [1.2]

$$R(z) = ( \, N(z) \, z^k ) \bmod G(z)$$ [2.11]

entspricht. Es werden folgende Regeln zur Modulo-Rechnung von Polynomen angewandt:

*Regel 1:* für beliebige Polynome A(z), B(z), C(z) gilt:
A(z) mod (B(z) C(z)) mod B(z) = A(z) mod B(z) mod (B(z) C(z)) = A(z) mod B(z)

*Regel 2:* für beliebige Polynome A(z), B(z), C(z) gilt:
(A(z) B(z)) mod (A(z) C(z)) = A(z) (B(z) mod C(z))

Für [2.7] gilt daher

$$R_2(z) = ( N(z) G_1(z) ( z^k \bmod G(z) )) \bmod ( G_1(z) G(z) ) \qquad [2.12]$$

$$= (N(z) G_1(z) z^k ) \bmod ( N(z) G_1(z) G(z) ) \bmod ( G_1(z) G(z) ) \quad (\text{Regel 1}) \quad [2.13]$$

$$= (N(z) G_1(z) z^k ) \bmod ( G_1(z) G(z) ) \qquad\qquad (\text{Regel 2}) \quad [2.14]$$

$$= G_1(z) (N(z) z^k ) \bmod G(z). \qquad\qquad (\text{Regel 1}) \quad [2.15]$$

Für R(z) folgt dann nach [2.9] und [2.15]:

$$R(z) = R_2(z) / G_1(z) \qquad\qquad [2.16]$$

$$= (N(z) z^k ) \bmod G(z) \qquad\qquad [2.17]$$

Damit ist Richtigkeit von [2.11] gezeigt.

*Empfängerseite*

Wenn der Rechner R1 ein Telegrammpolynom C(z) von einem anderen Rechnerknoten erhält, so multipliziert er dieses mit $D_1(z)$ gemäß

$$C_1(z) = C(z) D_1(z) \qquad\qquad [2.18]$$

Das Ergebnis $C_1(z)$ übermittelt er an den Rechner R2. Dieser überprüft die Richtigkeit des übertragenen Telegrammpolynoms, indem er das vom Rechner R1 erhaltene Polynom $C_1(z)$ durch $B_2(z)$ teilt. Wenn keine Verfälschung von Daten aufgetreten ist, so darf sich bei dieser Division kein Rest ergeben, d. h. es muß gelten

$$C_1(z) \bmod B_2(z) = 0. \qquad\qquad [2.19]$$

Die Richtigkeit dieser Behauptung ergibt sich aus folgender Überlegung: Angenommen, das vom Rechner R1 empfangene Telegrammpolynom C(z) sei ohne Rest durch G(z) teilbar. Es gibt dann ein Polynom H(z), für das gilt:

$$C(z) \bmod G(z) = 0 \iff C(z) = G(z)\, H(z) \qquad\qquad [2.20]$$

Mit [2.18] und [2.3] gilt dann für $C_1(z)$:

$$C_1(z) = C(z)\, G_1(z) = H(z)\, G(z)\, G_1(z) = H(z)\, B_2(z) \qquad\qquad [2.21]$$

Daraus folgt die Richtigkeit von [2.19].

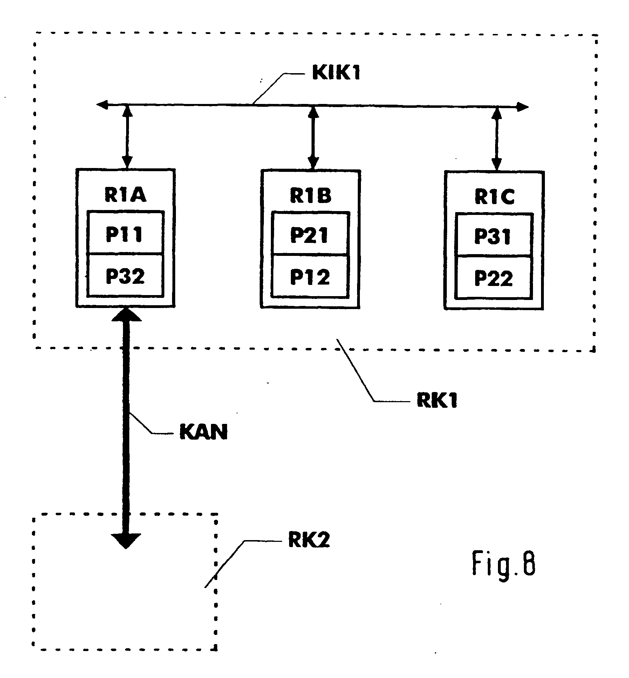

Fig. 8 zeigt in einer abgewandelten Darstellung den in Fig. 1 dargestellten Rechnerknoten RK1. Im Rechner R1A sind die Polynomsätze P11 und P32, im Rechner R1B die Polynomsätze P21 und P12 und im Rechner R1C die Polynomsätze P31 und P22 abgelegt. Die Polynomsatzpaare {P11, P12}, {P21, P22} und {P31, P32} wirken dabei jeweils in dem oben erläuterten Sinne jeweils zusammen. Der Rechner R1A kann somit mit dem Rechner R1B ein korrektes Redundanzpolynom berechnen durch das Zusammenwirken der Polynomsätze P11 und P12. Sollte der Rechner R1B ausfallen, so ist eine korrekte Berechnung eines Redundanzpolynoms noch immer möglich, indem der Polynomsatz P32 des Rechner R1A mit dem Polynomsatz P31 des Rechners R1C zusammenwirkt. Durch diese Verteilung von Polynomsätzen ist stets sichergestellt, daß zwar kein Rechner allein, aber jedes beliebige Paar von Rechner in der Lage ist, ein korrektes Redundanzpolynom zu ermitteln.

Es versteht sich, daß die in Fig. 8 gezeigte Verteilung von Polynomsätzen nur eine von vielen Möglichkeiten darstellt. So ist insbesondere denkbar, daß einer der nicht mit dem knotenexternen Kommunikationskanal KAN verbundenen Rechner R1B oder R1C über ein vollständiges Polynomsatzpaar verfügt und somit auch allein in der Lage ist, ein Redundanzpolynom korrekt zu berechnen.

Ersatzkanal

Bei einem weiteren vorteilhaften Ausführungsbeispiel der Erfindung ist neben dem knotenexternen Kommunikationskanal KAN noch ein weiterer knotenexterner Ersatzkanal vorgesehen. Fig. 8 zeigt ein mögliches Ausführungsbeispiel hierfür. Im Unterschied zu dem in Fig. 1 dargestellten Rechnerverbund sind hier zum einen die knoteninternen Kommunikationsverbindungen KIK1 und KIK2 als Punkt-zu-Punkt-Verbindungen ausgeführt. Zum anderen sind die Rechner R1B und R2B durch einen knotenexternen Ersatzkanal EKAN verbunden. Erfindungsgemäß ist vorgesehen, daß die beiden Rechnerknoten über diesen knotenexternen Ersatzkanal EKAN Daten austauschen, sobald der dafür ursprünglich vorgesehene knotenexternen Kommunikationskanal KAN defekt ist. Dies erfordert einen Umschaltvorgang vom knotenexternen Kommunikationskanal KAN zum knotenexternen Ersatzkommunikationskanal EKAN. Zur Durchführung eines derartigen Umschaltvorgangs sind dem Fachmann Maßnahmen geläufig, die an dieser Stelle nicht näher erläutert zu werden brauchen.

Im Hinblick auf die Erfindung muß jedoch außerdem sichergestellt sein, daß unmittelbar nach dem Umschaltvorgang die Rechner R1B und R2B, über die nun die Kommunikation zwischen den Rechnerknoten abläuft, nicht mehr über die Möglichkeit verfügen, korrekte Redundanzdaten zu ermitteln. Im Gegenzug müssen die mit dem knotenexternen Kommunikationskanal KAN verbundenen Rechner R1A und R2A, sofern sie nicht selbst defekt sind, wieder in die Lage versetzt werden, Redundanzdaten zu ermitteln. Wie dabei im einzelnen vorzugehen ist, hängt davon ab, auf welche Weise die Rechner Redundanzdaten ermitteln.

Werden, wie oben unter Variante 1 erläutert, die Redundanzdaten mit Hilfe einer Tabelle ermittelt, so übergeben die Rechner R1B und R2B unmittelbar nach dem Umschaltvorgang ihre korrekten Tabellenzeiger an die Rechner R1A bzw. R2A und zerstören anschließend die zurückbehaltene Kopie des Tabellenzeigers. Die Rechner R1A und R2A verfügen nun selbst über einen korrekten Tabellenzeiger und sind somit in der Lage zu überprüfen, daß die Rechner R1B bzw. R2B tatsächlich ihre Tabellenzeiger zerstört haben.

Werden hingegen die Redundanzdaten gemäß Variante 2 mit Hilfe eines Redundanzdatenberechnungsprozesses ermittelt, so verschiebt nach einem Umschaltvorgang von Rechner R1A auf Rechner R1B der Rechner R1B seinen im Ausgabepfad vorhandenen Redundanzdatenberechnungsprozeß an den Rechner R1A. Nach dieser Verschiebung verfügt der Rechner R1B nicht mehr über den Redundanzdatenberechnungsprozeß, dafür jedoch der Rechner R1A. Der erfolgreiche Abschluß dieser Verschiebung wird vorzugsweise durch Vergleichen der oben erwähnten Prozeßlisten verifiziert.

Bei Variante 3 berechnet der Rechner R 1 aus dem Nutzpolynom $N(z)$ und den Polynomen $A_1(z)$ und $B_1(z)$ ein Teilredundanzpolynom $R_1(z)$ gemäß

$$R_1(z) = (\ N(z)\ A_1(z)\ )\ \mathrm{mod}\ B_1(z)$$

und übermittelt dieses an den Rechner R2. Der Rechner R2 berechnet aus $R_1(z)$ und D2(z) das Redundanzpolynom R(z) gemäß

$$R(z) = R_2(z)\ /\ D_1(z).$$

Anschließend erstellt der Rechner R2 aus dem Nutzpolynom N(z) und dem berechneten Redundanzpolynom R(z) das zu übertragende Telegrammpolynom C(z):

$$C(z) = N(z)\ z^k + R(z)$$

Auf den Ersatzkommunikationskanal EKAN wird auch dann umgeschaltet, wenn einer der mit dem knotenexternen Kommunikationskanal KAN unmittelbar verbundenen Rechner defekt ist. Dies setzt allerdings voraus, daß der Rechnerknoten, zu dem der defekte Rechner gehört, noch wenigstens zwei weitere fehlerfreie Rechner umfaßt. In diesem Fall überprüft der fehlerfreie und nicht mit dem knotenexternen Ersatzkommunikationskanal verbundene Rechner, daß der mit dem knotenexternen Erstzkommunikationskanal verbundene Rechner nicht mehr über einen korrekten Tabellenzeiger bzw. über einen Redundanzdatenberechnungsprozeß im Ausgabepfad verfügt.

Es sei an dieser Stelle darauf hingewiesen, daß noch eine Vielzahl anderer Varianten und Weiterbildungen der Erfindung denkbar sind, die hier nicht alle aufgeführt werden können. So ist es beispielsweise leicht möglich, die Erfindung auf Rechnerverbände anzuwenden, bei denen mehr als zwei Rechnerknoten über mehrere knotenexterne Kommunikationskanäle miteinander kommunizieren. Außerdem ist das Verfahren nicht auf eine bidirektionale Übertragung zwischen den Rechnerknoten beschränkt, sondern läßt sich vorteilhaft genauso auf eine unidirektionale Übertragung anwenden.

**Patentansprüche**

**1.**  Verfahren zum sicheren einkanaligen Übertragen von Daten zwischen den Rechnerknoten (RK1, RK2) eines Rechnerverbundes (RV), insbesondere für den Einsatz in Eisenbahnsignalanlagen, bei dem

a) ein signaltechnisch sicher ausgeführter Rechnerknoten (RK1), der mindestens zwei parallel arbeitende, durch einen knoteninternen Kommunikationskanal untereinander verbundene Rechner (R1A, R1B, R1C) umfaßt, über einen knotenexternen Kommunikationskanal (KAN) an einen anderen derartigen Rechnerknoten (RK2) Nutzdaten und aus den Nutzdaten ermittelte und diese bei der Übertragung sichernde Redundanzdaten sendet, **dadurch gekennzeichnet**,
b) daß verhindert wird, daß ein Rechner (R1A), der über den knotenexternen Kommunikationskanal Nutzdaten sendet, zu diesen Nutzdaten korrekte Redundanzdaten ermittelt.

**2.**  Verfahren nach Anspruch 1, bei dem

a) die Redundanzdaten aus den Nutzdaten mit Hilfe einer Tabelle ermittelt werden, die in jedem Rechner in einem Datenspeicher unter festgelegten Adressen abgespeichert ist, und bei dem
b) sichergestellt wird, daß ein Rechner, der über den knotenexternen Kommunikationskanal Nutzdaten sendet, diese Adressen nicht kennt.

**3.**  Verfahren nach Anspruch 1, bei dem

a) die Redundanzdaten aus den Nutzdaten mit Hilfe eines Redundanzdatenberechnungsprozesses berechnet werden, und bei dem
b) verhindert wird, daß ein Rechner, der über den knotenexternen Kommunikationskanal Nutzdaten sendet, Zugriff auf einen Redundanzdatenberechnungsprozeß hat, mit dem zu diesen Nutzdaten korrekte Redundanzdaten berechenbar sind.

4. Verfahren nach Anspruch 3, bei dem wenigstens ein Rechner, der nicht über den knotenexternen Kommunikationskanal Nutzdaten sendet, überprüft, ob der Rechner, der über den knotenexternen Kommunikationskanal Nutzdaten sendet, einen Redundanzdatenberechnungsprozeß hat, mit dem zu diesen Nutzdaten korrekte Redundanzdaten berechenbar sind.

5. Verfahren nach Anspruch 1, bei dem die Redundanzdaten durch Zusammenwirken von zwei unterschiedlichen, auf verschiedenen Rechnern (R1A, R1B, R1C in Fig. 8) abgelegten Polynomsätzen (P11,P12; P21, P22; P31, P32) ermittelt werden.

6. Verfahren nach einem der vorhergehenden Ansprüche, bei dem ferner verhindert wird, daß ein Rechner, der über den knotenexternen Kommunikationskanal (KAN) Nutzdaten empfängt, zu diesen Nutzdaten korrekte Redundanzdaten ermittelt.

7. Verfahren nach einem der vorhergehenden Ansprüche, bei dem in jedem Rechnerknoten genau ein Rechner mit dem knotenexternen Kommunikationskanal physikalisch verbunden ist.

8. Verfahren nach Anspruch 6, bei dem, wenn der knotenexterne Kommunikationskanal (KAN) defekt ist, die Übertragung zwischen dem einen (RK1) und dem anderen (RK2) Rechnerknoten über einen zusätzlichen knotenexternen Ersatzkommunikationskanal (EKAN) erfolgt, der nicht mit den gleichen Rechnern physikalisch verbunden ist wie der knotenexterne Kommunikationskanal (KAN).

9. Rechnerverbund (RV), insbesondere für den Einsatz in Eisenbahnsignalanlagen, mit:

   a) zwei signaltechnisch sicher ausgeführten Rechnerknoten (RK1, RK2), die jeweils mindestens zwei parallel Nutzdaten ermittelnde, über einen knoteninternen Kommunikationskanal (KIK1, KIK2) untereinander verbundene Rechner (R1A, R1B, R1C; R2A, R2B, R2C) umfassen, und mit
   b) einem knotenexternen Kommunikationskanal (KAN) zwischen den beiden Rechnerknoten zur Übertragung der Nutzdaten und von aus den Nutzdaten ermittelten und diese bei der Übertragung sichernden Redundanzdaten,

   **dadurch gekennzeichnet,**
   **daß** in jedem Rechnerknoten Mittel vorhanden sind zum Verhindern, daß ein Rechner, der über den knotenexternen Kommunikationskanal (KAN) Nutzdaten sendet, zu diesen Nutzdaten korrekte Redundanzdaten ermittelt.

10. Rechnerverbund nach Anspruch 9, bei dem

   a) die Redundanzdaten aus den Nutzdaten mit Hilfe einer Tabelle ermittelbar sind, die in jedem Rechner in einem Datenspeicher unter festgelegten Adressen abgespeichert ist, und bei dem
   b) die Mittel Programmittel sind, die sicherstellen, daß ein Rechner, der über den knotenexternen Kommunikationskanal Nutzdaten sendet, diese Adressen nicht kennt.

11. Rechnerverbund nach Anspruch 9, bei dem

   a) die Redundanzdaten aus den Nutzdaten mit Hilfe eines Redundanzdatenberechnungsprozesses berechenbar sind, und bei dem
   b) die Mittel Programmittel sind, die verhindern, daß ein Rechner, der über den knotenexternen Kommunikationskanal Nutzdaten sendet, Zugriff auf einen Redundanzdatenberechnungsprozeß hat, mit dem zu diesen Nutzdaten korrekte Redundanzdaten berechenbar sind.

12. Rechnerverbund nach Anspruch 11, bei dem wenigstens ein Rechner, der nicht über den knotenexternen Kommunikationskanal Nutzdaten sendet, Prüfmittel hat zum Überprüfen, ob der Rechner, der über den knotenexternen Kommunikationskanal Nutzdaten sendet, einen Redundanzdatenberechnungsprozeß hat, mit dem zu diesen Nutzdaten korrekte Redundanzdaten berechenbar sind.

13. Rechnerverbund nach Anspruch 9, bei dem zweite Mittel vorhanden sind, die verhindern, daß ein Rechner, der über den knotenexternen Kommunikationskanal (KAN) Nutzdaten empfängt, zu diesen Nutzdaten korrekte Redundanzdaten ermittelt.

14. Rechnerverbund nach einem der Ansprüche 9 bis 13, bei dem in jedem Rechnerknoten genau ein Rechner mit dem knotenexternen Kommunikationskanal physikalisch verbunden ist.

15. Rechnerverbund nach Anspruch 14, bei dem zwischen den beiden Rechnerknoten ein knotenexterner Ersatzkommunikationskanal (EKAN) vorgesehen ist, der nicht mit den gleichen Rechnern physikalisch verbunden ist wie der knotenexterne Kommunikationskanal KAN.

16. Signaltechnisch sicher ausgeführter Rechnerknoten (RK1, RK2), insbesondere für den Einsatz in Eisenbahnsignalanlagen, mit:

 a) mindestens zwei parallel Nutzdaten ermittelnden, über einen knoteninternen Kommunikationskanal (KIK1, KIK2) untereinander verbundenen Rechnern (R1A, R1B, R1C; R2A, R2B, R2C), und mit
 b) wenigstens einer Übertragungsschnittstelle an einen weiteren Rechnerknoten zur Übertragung der Nutzdaten und von aus den Nutzdaten ermittelten und diese bei der Übertragung sichernden Redundanzdaten,

 **dadurch gekennzeichnet,**
 **daß** Mittel vorhanden sind zum Verhindern, daß ein Rechner, der über die Ausgabeschnittstelle Nutzdaten sendet, zu diesen Nutzdaten korrekte Redundanzdaten ermittelt.


**Revendications**

1. Procédé de transmission monocanal sécurisée de données entre les noeuds d'ordinateurs (RK1, RK2) d'un réseau d'ordinateurs (RV), notamment à utiliser dans les équipement de signalisation ferroviaire, avec lequel a) un noeud d'ordinateurs (RK1) réalisé de manière sécurisée du point de vue de la technique de signalisation qui comprend au moins deux ordinateurs (R1A, R1B, R1C) fonctionnant en parallèle et reliés entre eux par un canal de communication interne au noeud envoie des données utiles et des données de redondance déterminées à partir des données utiles et sécurisant celles-ci lors de la transmission à un autre noeud d'ordinateurs (RK2) de ce type par le biais d'un canal de communication externe aux noeuds KAN,
 **caractérisé en ce** b) qu'il est empêché qu'un ordinateur (R1A) qui envoie des données utiles par le biais du canal de communication externe aux noeuds détermine les données de redondance correctes pour ces données utiles.

2. Procédé selon la revendication 1, avec lequel a) les données de redondance sont déterminées à partir des données utiles à l'aide d'un tableau qui peut être enregistré dans chaque ordinateur dans une mémoire de données sous des adresses fixes et avec lequel b) il est garantit qu'un ordinateur qui envoie des données utiles par le biais du canal de communication externe aux noeuds ne connaît pas ces adresses.

3. Procédé selon la revendication 1, avec lequel a) les données de redondance sont calculées à partir des données utiles à l'aide d'un processus de calcul des données de redondance et avec lequel b) il est empêché qu'un ordinateur qui envoie des données utiles par le biais du canal de communication externe aux noeuds ait accès à un processus de calcul des données de redondance avec lequel peuvent être calculées les données de redondance correctes pour ces données utiles.

4. Procédé selon la revendication 3, avec lequel au moins un ordinateur qui n'envoie pas de données utiles par le biais du canal de communication externe aux noeuds vérifie si l'ordinateur qui envoie des données utiles par le biais du canal de communication externe aux noeuds possède un processus de calcul des données de redondance avec lequel peuvent être calculées les données de redondance correctes pour ces données utiles.

5. Procédé selon la revendication 1, avec lequel les données de redondance sont déterminées par l'interaction de deux jeux de polynômes (P11, P12 ; P21, P22 ; P31, P32) enregistrés sur des ordinateurs différents (R1A, R1B, R1C dans la figure 8).

6. Procédé selon l'une des revendications précédentes, avec lequel il est en plus empêché qu'un ordinateur qui reçoit des données utiles par le biais du canal de communication externe aux noeuds (KAN) détermine des données de redondance correctes pour ces données utiles.

7. Procédé selon l'une des revendications précédentes, avec lequel dans chaque noeud d'ordinateurs, exactement un ordinateur est relié physiquement avec le canal de communication externe aux noeuds.

8. Procédé selon la revendication 6, avec lequel, quand le canal de communication externe aux noeuds (KAN) est défectueux, la transmission entre l'un (RK1) et l'autre (RK2) des noeuds d'ordinateurs s'effectue par le biais d'un canal de communication de remplacement externe aux noeuds (EKAN) supplémentaire qui n'est pas relié physiquement aux mêmes ordinateurs que le canal de communication externe aux noeuds (KAN).

9. Réseau d'ordinateurs (RV), destiné notamment à être utilisé dans les équipements de signalisation ferroviaire, comprenant : a) deux noeuds d'ordinateurs (RK1, RK2) ayant une construction sécurisée du point de vue de la technique de signalisation qui comprennent chacun au moins deux ordinateurs (R1A, R1B, R1C ; R2A, R2B, R2C) déterminant parallèlement des données utiles et reliés entre eux par un canal de communication interne au noeud (KIK1, KIK2) et comprenant b) un canal de communication externe aux noeuds (KAN) entre les deux noeuds d'ordinateurs pour transmettre les données utiles et des données de redondance déterminées à partir des données utiles et sécurisant celles-ci lors de la transmission,
**caractérisé en ce qu'**il existe dans chaque noeud d'ordinateurs des moyens pour empêcher qu'un ordinateur qui envoie des données utiles par le biais du canal de communication externe aux noeuds (KAN) détermine les données de redondance correctes pour ces données utiles.

10. Réseau d'ordinateurs selon la revendication 9, avec lequel a) les données de redondance peuvent être déterminées à partir des données utiles à l'aide d'un tableau qui est enregistré dans chaque ordinateur dans une mémoire de données sous des adresses fixes et avec lequel b) les moyens sont des moyens de programme qui garantissent qu'un ordinateur qui envoie des données utiles par le biais du canal de communication externe aux noeuds ne connaît pas ces adresses.

11. Réseau d'ordinateurs selon la revendication 9, avec lequel

   a) les données de redondance peuvent être calculées à partir des données utiles à l'aide d'un processus de calcul des données de redondance et avec lequel
   b) les moyens sont des moyens de programme qui empêchent qu'un ordinateur qui envoie des données utiles par le biais du canal de communication externe aux noeuds ait accès à un processus de calcul des données de redondance avec lequel peuvent être calculées les données de redondance correctes pour ces données utiles.

12. Réseau d'ordinateurs selon la revendication 11, avec lequel au moins un ordinateur qui n'envoie pas de données utiles par le biais du canal de communication externe aux noeuds possède des moyens de contrôle pour vérifier si l'ordinateur qui envoie des données utiles par le biais du canal de communication externe aux noeuds possède un processus de calcul des données de redondance avec lequel peuvent être calculées les données de redondance correctes pour ces données utiles.

13. Réseau d'ordinateurs selon la revendication 9, avec lequel il existe des deuxièmes moyens pour empêcher qu'un ordinateur qui reçoit des données utiles par le biais du canal de communication externe aux noeuds (KAN) détermine des données de redondance correctes pour ces données utiles.

14. Réseau d'ordinateurs selon l'une des revendications 9 à 13, avec lequel dans chaque noeud d'ordinateurs, exactement un ordinateur est relié physiquement avec le canal de communication externe aux noeuds.

15. Réseau d'ordinateurs selon la revendication 14, avec lequel un canal de communication de remplacement externe aux noeuds (EKAN) est prévu entre les deux noeuds d'ordinateurs, lequel n'est pas relié physiquement aux mêmes ordinateurs que le canal de communication externe aux noeuds (KAN).

16. Noeud d'ordinateur (RK1, RK2) ayant une construction sécurisée du point de vue de la technique de signalisation, destiné notamment à être utilisé dans les équipements de signalisation ferroviaire, comprenant :

   a) au moins deux ordinateurs (R1A, R1B, R1C ; R2A, R2B, R2C) déterminant parallèlement des données utiles et reliés entre eux par un canal de communication interne au noeud (KIKI, KIK2) et comprenant
   b) au moins une interface de transmission vers un autre noeud d'ordinateurs pour la transmission des données utiles et des données de redondance déterminées à partir des données utiles et sécurisant celles-ci lors de la transmission

**caractérisé en ce qu'**il existe des moyens pour empêcher qu'un ordinateur qui envoie des données utiles par le biais de l'interface de sortie détermine les données de redondance correctes pour ces données utiles.

## Claims

1. Method for the secure monochannel transmission of data between the computer nodes (RK1, RK2) of a computer network (RV), in particular for use in railway signalling systems, wherein

   a) a computer node (RK1) designed safely for signal technology, which comprises at least two computers (R1A, R1B, R1C) operating in parallel and connected together via a node internal communication channel, sends working data and redundancy data, which are determined from the working data and secure them for transmission, to another such computer node (RK2) via a node external communication channel (KAN),
   **characterised in that**
   b) a computer (R1A) which sends working data via the node external communication channel is prevented from determining correct redundancy data for these working data.

2. Method according to Claim 1, wherein

   a) the redundancy data are determined from the working data with the aid of a table, which is stored in each computer under fixed addresses in a data memory, and wherein
   b) it is ensured that a computer which sends working data via the node external communication channel does not know these addresses.

3. Method according to Claim 1, wherein

   a) the redundancy data are calculated from the working data with the aid of a redundancy data calculation process, and wherein
   b) a computer which sends working data via the node external communication channel is prevented from having access to a redundancy data calculation process, by which correct redundancy data for these working data can be calculated.

4. Method according to Claim 3, wherein at least one computer, which does not send working data via the node external communication channel, checks whether the computer which sends working data via the node external communication channel has a redundancy data calculation process, by which correct redundancy data for these working data can be calculated.

5. Method according to Claim 1, wherein the redundancy data are determined by interaction of two different polynomial sets (P11, P12; P21, P22; P31, P32) stored on different computers (R1A, R1B, R1C, in Fig. 8).

6. Method according to one of the preceding claims, wherein a computer which receives working data via the node external communication channel (KAN) is furthermore prevented from determining correct redundancy data for these working data.

7. Method according to one of the preceding claims, wherein precisely one computer in each computer node is physically connected to the node external communication channel.

8. Method according to Claim 6, wherein if the node external communication channel (KAN) is defective, transmission between one computer node (RK1) and the other computer node (RK2) takes place via an additional substitute node external communication channel (EKAN), which is not physically connected to the same computer as the node external communication channel (KAN).

9. Computer network (RV), in particular for use in railway signalling systems, having:

   a) two computer nodes (RK1, RK2) designed safely for signal technology, which respectively comprise at least two computers (R1A, R1B, R1C; R2A, R2B, R2C) which determine working data in parallel and are connected together via a node internal communication channel (KIK1, KIK2), and having

b) a node external communication channel (KAN), between the two computer nodes for transmitting the working data and redundancy data, which are determined from the working data and secure them for transmission,

**characterised in that**
means are provided in each computer node in order to prevent a computer, which sends working data via the node external communication channel (KAN), from determining correct redundancy data for these working data.

10. Computer network according to Claim 9, wherein

a) the redundancy data can be determined from the working data with the aid of a table, which is stored in each computer under fixed addresses in a data memory, and wherein
b) the means are program means which ensure that a computer, which sends working data via the node external communication channel, does not know these addresses.

11. Computer network according to Claim 9, wherein

a) the redundancy data can be calculated from the working data with the aid of a redundancy data calculation process, and wherein
b) the means are program means which prevent a computer, which sends working data via the node external communication channel, from having access to a redundancy data calculation process by which correct redundancy data for these working data can be calculated.

12. Computer network according to Claim 11, wherein at least one computer, which does not send working data via the node external communication channel, has test means for checking whether the computer which sends working data via the node external communication channel has a redundancy data calculation process by which correct redundancy data for these working data can be calculated.

13. Computer network according to Claim 9, wherein two means are provided which prevent a computer which receives working data via the node external communication channel (KAN) from determining correct redundancy data for these working data.

14. Computer network according to one of Claims 9 to 13, wherein precisely one computer in each computer node is physically connected to the node external communication channel.

15. Computer network according to Claim 14, wherein a substitute node external communication channel (EKAN), which is not physically connected to the same computer as the node external communication channel KAN, is provided between the two computer nodes.

16. Computer node (RK1, RK2) designed safely for signal technology, in particular for use in railway signalling systems, having,

a) at least two computers (R1A, R1B, R1C; R2A, R2B, R2C) which determine working data in parallel and are connected together via a node internal communication channel (KIK1, KIK2), and having,
b) at least one transmission interface to a further computer node for transmitting the working data and redundancy data, which are determined from the working data and secure them for transmission,
**characterised in that**
means are provided in order to prevent a computer, which sends working data via the output interface, from determining correct redundancy data for these working data.

**RV**

Fig.1

**Rechner R1A**     **Rechner R1B**     **Rechner R1C**

| | Rechner R1A | Rechner R1B | Rechner R1C |
|---|---|---|---|
| S1: | Nutzdaten ermitteln | Nutzdaten ermitteln | Nutzdaten ermitteln |
| S2: | | Redundanzdaten ermitteln | Redundanzdaten ermitteln |
| S3: | Nutzdaten autauschen u. vergleichen | Nutzdaten autauschen u. vergleichen | Nutzdaten autauschen u. vergleichen |
| S4: | | Redundanzdaten austauschen u. vergleichen | Redundanzdaten austauschen u. vergleichen |
| S5: | Redundanzdaten übernehmen | Redundanzdaten übergeben | |
| S6: | Redundanzdaten übernehmen | | Redundanzdaten übergeben |
| S7: | Redundanzdaten vergleichen | | |
| S8: | Nutzdaten und Redundanzdaten senden | | |

Fig.2

EP 0 977 395 B1

**Rechner R2A**      **Rechner R2B**      **Rechner R2C**

Fig.3

E1:
```
Nutzdaten und
Redundanzdaten
empfangen
```

E2:
```
Nutzdaten und          Nutzdaten und          Nutzdaten und
Redundanzdaten         Redundanzdaten         Redundanzdaten
übergeben              übernehmen             übernehmen
```

E3:
```
                       Redundanzdaten         Redundanzdaten
                       auswerten              auswerten
```

E4:
```
                       Ergebnis               Ergebnis
                       vergleichen            vergleichen
```

E5:
```
Vergleichs-            Vergleichs-
ergebnis               ergebnis
übernehmen             übergeben
```

E6:
```
                                              Vergleichs-
                                              ergebnis
                                              übergeben
```

E7:
```
Nutzdaten              Nutzdaten              Nutzdaten
verarbeiten            verarbeiten            verarbeiten
```

20

| Speicheradresse | Nutzdatenbyte | Redundanzbits |
|:---:|:---:|:---:|
| HEX F8B4 | 00 00 00 01 | 10 |
| HEX F8B5 | 00 00 00 10 | 00 |
| HEX F8B6 | 00 00 00 11 | 01 |
| HEX F8B7 | 00 00 01 00 | 01 |
| HEX F8B8 | 00 00 01 01 | 00 |
| | ... | |

Fig.4

**RV**

Fig.5

**Rechner R2A**     **Rechner R2B**

**Fig.6**

**EZ1:** Nutzdaten und Redundanzdaten empfangen

**EZ2:** Nutzdaten und Redundanzdaten übergeben → Nutzdaten und Redundanzdaten übernehmen

**EZ3:** Tabellenzeiger übergeben → Tabellenzeiger überprüfen

**EZ4:** korrekten Tabellenzeiger übernehmen ← korrekten Tabellenzeiger übergeben

**EZ5:** Redundanz prüfen     Redundanz prüfen

**EZ6:** Tabellenzeiger zerstören u. übergeben → zerstörten Tabellenzeiger übernehmen u. prüfen

**EZ7:** Prüfergebnis austauschen u. vergleichen ↔ Prüfergebnis austauschen u. vergleichen

**EZ8:** Nutzdaten verarbeiten     Nutzdaten verarbeiten

**Rechner R1A**  **Rechner R1B**

Applikations-ebene

Mittelebene

Betriebs-systemebene

Hardware-ebene

Applikation

Applikation

Eingabe-pfad    Ausgabe-pfad

Eingabe-pfad    Ausgabe-pfad

FTS

KS

BSK

FTS

KS

BSK

KIK1

Hardware

Hardware

RK1

KAN

Fig.7

KIK1

R1A

P11

P32

R1B

P21

P12

R1C

P31

P22

RK1

KAN

RK2

Fig.8

Fig.9